# EUROPÄISCHE PATENTSCHRIFT

(11) **EP 0 633 463 B1**
(45) Veröffentlichungstag und Bekanntmachung des Hinweises auf die Patenterteilung: **27.08.1997**
(21) Anmeldenummer: 94109630.7
(22) Anmeldetag: 22.06.1994
(51) Int. Cl.: G01N 21/25, G01N 21/85, B07C 5/342

(54) **Gerät zur Messung der Farbe von Glas, insbesondere von Glasbruch**
Apparatus for measuring the colour of glass, particularly of broken glass
Appareil pour déterminer la couleur du verre, notamment du verre cassé

(30) Priorität: 09.07.1993 DE 4322865
(43) Veröffentlichungstag der Anmeldung: 11.01.1995
(73) Patentinhaber: Bodenseewerk Gerätetechnik GmbH, 88662 Überlingen (DE)
(72) Erfinder: Gross, Michael, Dr., D-88662 Überlingen (DE); Schmidt, Dietmar, D-88690 Uhldingen-Mühlhofen (DE); Kordulla, Hans, D-88696 Owingen (DE); Stelte, Norbert, Dr., D-88641 Überlingen (DE)
(74) Vertreter: Wolgast, Rudolf, Dipl.-Chem. Dr.

(56) Entgegenhaltungen:
- EP-A- 0 274 403
- PATENT ABSTRACTS OF JAPAN vol. 6, no. 62 (P-111) (940) 21. April 1982 & JP-A-57 004 526 (SATAKE SEISAKUSHO) 11. Januar 1982

## Beschreibung

Die Erfindung betrifft ein Gerät zur Messung der Farbe von Glas, insbesondere von Glasbruch, durch Messung der Transmission des Glases gleichzeitig in unterschiedlichen Spektralbereichen, bei welchem das Glas auf einer Transportbahn zwischen einer Lichtquelle und einer Empfängereinheit mit Filtern und photoelektrischen Detektoren hindurchgeführt wird.

Bekannte Geräte dieser Art arbeiten mit teildurchlässigen Spiegeln. Ein durch das Glas hindurchgetretenes Lichtbündel wird durch einen unter 45° zur Bündelachse angeordneten teildurchlässigen Spiegel in zwei Teilbündel aufgespalten. Jedes Teilbündel tritt durch ein zugehöriges Filter und fällt auf einen Detektor. Eine solche Anordnung ist durch die Verwendung eines teildurchlässigen Spiegels aufwendig.

Der Erfindung liegt die Aufgabe zugrunde, eine einfache und preisgünstige Konstruktion eines solchen Gerätes zu schaffen.

Erfindungsgemäß wird diese Aufgabe dadurch gelöst, daß
(a) eine Gruppe photoelektrischer Detektoren an einer Stirnseite je eines zylindrischen Tubus angeordnet ist,
(b) die Achsen der Tuben einen Winkel bilden und sich in der Ebene der Transportbahn schneiden,
(c) in den Tuben je eine Linsenoptik gehaltert ist, wobei jede Linsenoptik die Ebene der Transportbahn auf einer zugehörigen Detektorgruppe abbildet; und
(d) den Detektorgruppen Filter mit jeweils unterschiedlichen Durchlassbereichen vorgeschaltet sind.

Es sind so für die beiden Durchlassbereiche (Spektralbereiche) vollständig getrennte Strahlengänge vorgesehen. Durch die spiegelbildliche Anordnung der Strahlengänge wird aber dafür gesorgt, daß in beiden Strahlengängen Licht von dem gleichen Fleck des Glases beobachtet wird.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt schematisch den Grundaufbau einer Vorrichtung zur Sortierung von Altglas nach Farben in zwei Fraktionen.
- Fig.2: zeigt einen Schnitt durch eine Empfängereinheit bei der Vorrichtung von Fig.1.
- Fig.3a bis 3c: sind perspektivische Darstellungen einer Baugruppe mit vier quer zur Transportrichtung nebeneinander angeordneten Empfängereinheiten der in Fig.2 dargestellten Art.
- Fig.4: zeigt schematisch eine Draufsicht auf zwei gegeneinander versetzte Reihen von kreisförmigen Bereichen auf der Transportbahn, die auf die Detektoren abgebildet werden, und auf die Effektorik.

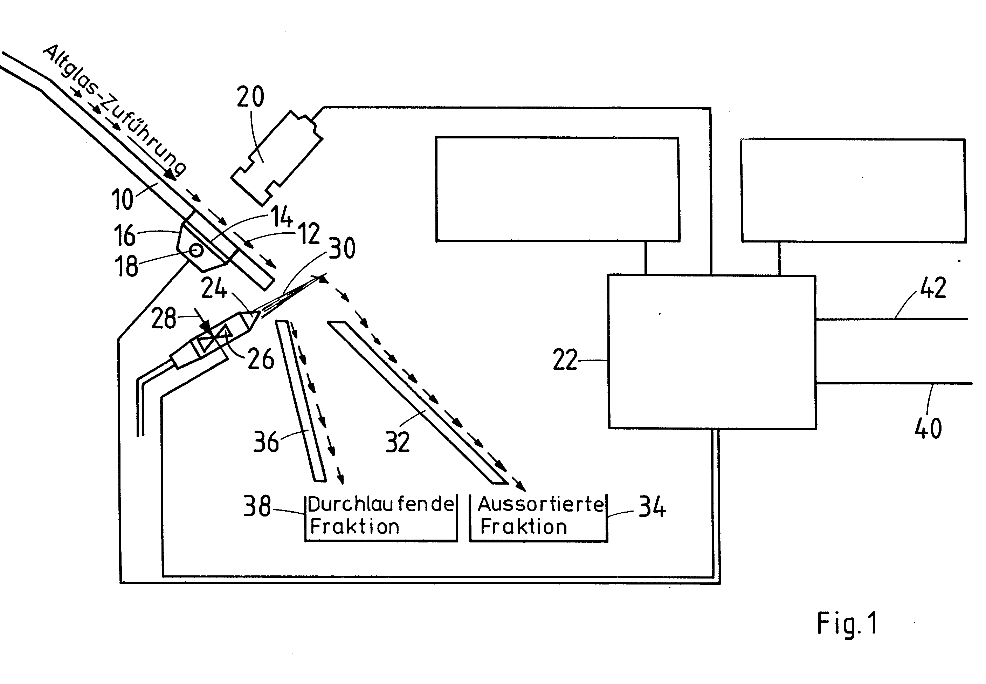

In Fig.1 ist mit 10 eine Transportbahn in Form einer Rutsche bezeichnet. Auf der Transportbahn 10 wird Altglas in Form von Glasbruch zugeführt. Das ist in Fig.1 durch Pfeile 12 angedeutet. In die Transportbahn 10 ist eine diffus lichtdurchlässige Platte 14 eingebaut. Unter der Platte 14 sitzt ein Reflektor 16 mit einer sich quer über die Transportbahn 10 erstreckenden langgestreckten Lichtquelle 18. Die Lichtquelle ist eine Leuchtstofflampe, die im wesentlichen weißes Licht emittiert. Das Licht tritt durch das auf der Transportbahn 10 als Glasscherben durchlaufende Altglas 12, das infolge der diffus lichtdurchlässigen Platte 14 gleichmäßig ausgeleuchtet wird. Das hindurchtretende Licht wird von einem Sensorkopf 20 erfaßt. Der Sensorkopf 20 mißt die Lichtintensität in zwei verschiedenen Spektralbereichen. Eine Auswerteschaltung 22 ordnet anhand dieser Messungen die Glasscherbe entweder einer durchlaufenden Fraktion oder einer auszusortierenden Fraktion zu.

Die Auswerteschaltung 22 steuert eine Effektorik in Form einer Druckluftdüse 24 mit einem Ventil 26. Der Druckluftdüse 24 wird Druckluft über einen Anschluß 28 zugeführt. Die Druckluft wird über das von der Auswerteschaltung gesteuerte Ventil 26 auf die Düse 24 geleitet oder abgesperrt. Viele der beschriebenen Effektoren decken in einer Reihe die Breite der Transportbahn 10 ab.

Die beschriebene Effektorik sitzt am Ende der Transportbahn 10. Wenn die zu bewertende Glasscherbe als "auszusortieren" bewertet wird, dann wird das Ventil aufgesteuert. Durch einen Druckluftstrahl 30 wird die Glasscherbe weggeblasen und gelangt über eine Rutsche 32 in einen Behälter 34 für die aussortierte Fraktion. Anderenfalls fällt die Glasscherbe auf eine steilere Rutsche 36 und wird von dieser in einen Behälter 38 für die durchlaufende Fraktion. Der Auswerteschaltung 22 werden über eine Leitung 40 Klassifikations-Parameter eingegeben. Eine Leitung 42 liefert Daten an eine zentrale Kontrolle der Anlage.

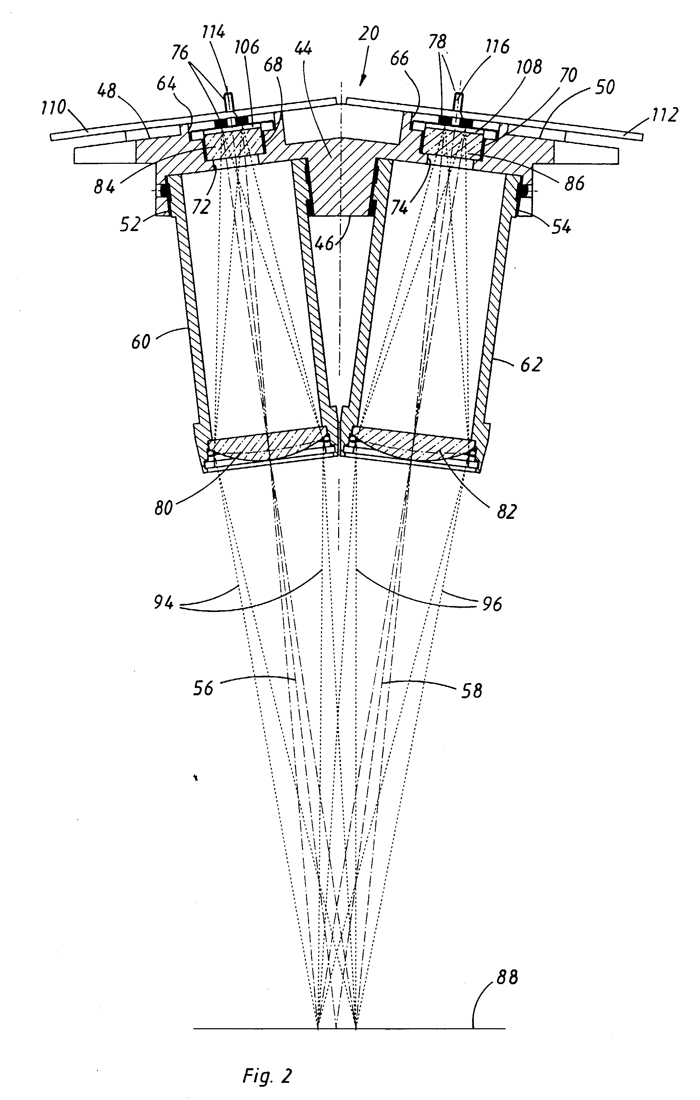

Fig.2 zeigt einen Sensorkopf, der eine Empfängereinheit 20 bildet, durch welche zwei Spektralbereiche des von der Glasscherbe durchgelassenen Lichtes gemessen werden können.

Die Empfängereinheit 20 enthält einen Grundkörper 44. Der Grundkörper 44 weist eine plane Fläche 46 auf der Unterseite auf. Die Oberseite des Grundkörpers ist flach dachförmig mit zwei Flächen 48 und 50, die einen stumpfen Winkel miteinander bilden. In der Unterseite 46 des Grundkörpers 44 sind zwei Bohrungen oder Ausnehmungen 52 und 54 vorgesehen, deren Achsen 56 bzw. 58 einen Winkel miteinander bilden und jeweils senkrecht zu einer der Flächen 48 bzw. 50 verlaufen. In jede der Bohrungen 52 und 54 ist ein Tubus 60 bzw. 62 eingesetzt. Die Achse des Tubus 60 fällt mit der Achse 56 zusammen. Die Achse des Tubus 62 fällt mit der Achse 58 zusammen.

Der Grundkörper 44 weist von den Flächen 48 und 50 her flache rechteckige Ausnehmungen 64 bzw. 66 zentriert zu den Achsen 56 bzw. 58 auf. An die Ausnehmungen 64 und 66 schließen sich im Querschnitt kleinere, ebenfalls rechteckige Ausnehmungen 68 bzw. 70 an. Die Ausnehmungen 68 bzw. 70 sind ebenfalls zu den Achsen 56 bzw. 58 zentriert. Die Ausnehmungen 68 und 70 sind durch rechteckige Durchbrüche 72 bzw. 74 mit den Ausnehmungen 52 bzw. 54 und damit dem Inneren der Tuben 60 bzw. 62 verbunden. Auch die Durchbrüche 72 und 74 sind zu den zugehörigen Achsen 56 bzw. 58 zentriert.

In den Ausnehmungen 68 und 70 sitzt je eine Gruppe 76 bzw. 78 photoelektrischer Detektoren. Die photoelektrischen Detektoren sitzen somit jeweils vor der oberen Stirnseite der Tuben 60 bzw. 62. In den kleinen rechteckigen Ausnehmungen 68 und 70 sind Farbfilter 84 und 86 angeordnet. Die Farbfilter 84 und 86 sind unterschiedlich und lassen jedes einen Spektralbereich durch, wie er für die Farbklassifikation erforderlich ist.

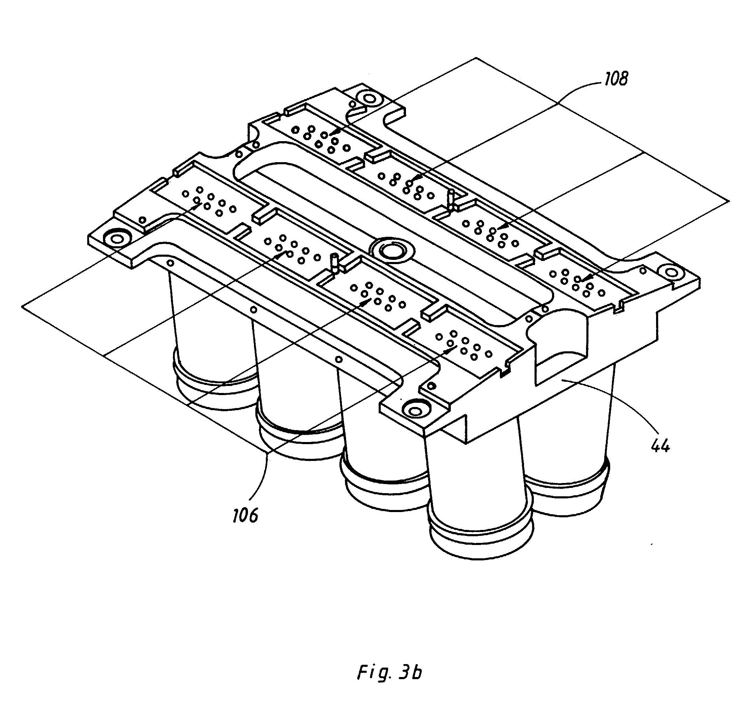

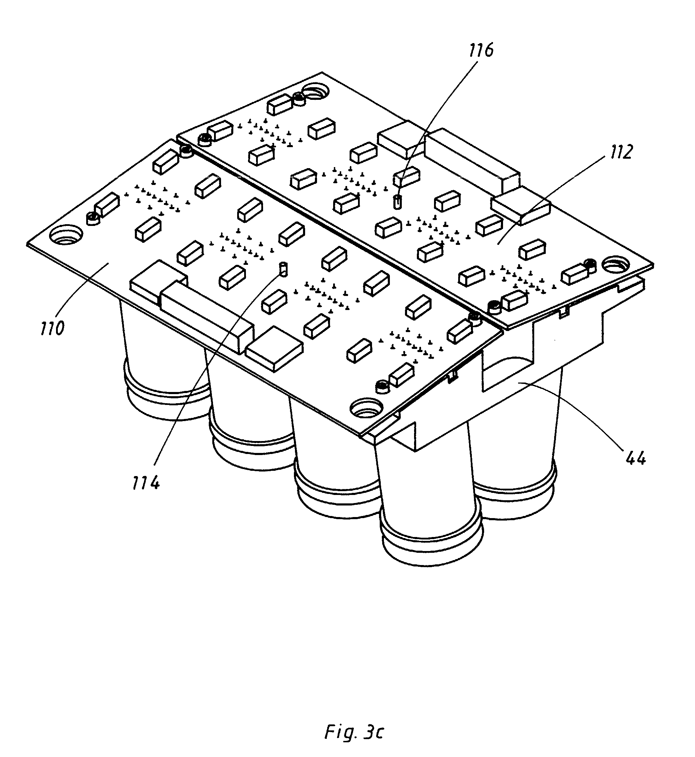

Oberhalb der Farbfilter 84 und 86 befinden sich Lochplatten 106, 108, die in Fig. 3b gut erkennbar sind. Jede der Lochplatten 106,108 enthält zwei Reihen von runden Löchern, die gegeneinander versetzt angeordnet sind. Wie in Fig. 3b erkennbar ist, sind jeweils vier Lochplatten 106 bzw. 108 zu einer baulichen Einheit zusammengefasst, wodurch der Zusammenbau der Vorrichtung erleichtert wird. Oberhalb der Lochplatten 106 und 108 sind auf den oberen Dachflächen 48 und 50 des Grundkörpers 44 des Empfängers Platinen 110 und 112 angeordnet, wie dies in Fig. 3c erkennbar ist. Die Platinen 110 und 112 tragen auf ihren Unterseiten die Gruppen 76 bzw. 78 von photoelektrischen Detektoren, beispielsweise Phototransistoren. Diese sind in der Zeichnung nicht erkennbar und so angeordnet, dass sie mit den Löchern in den Lochplatten 106 und 108 korrespondieren. Die auf den Oberseiten der Platinen 110 und 112 befindlichen, nicht näher beschriebenen Bauteile dienen zum Betrieb der auf der Unterseite der Platinen 110 und 112 befindlichen photoelektrischen Detektoren. Zum Zentrieren der Platinen auf dem Grundkörper 44 bzw. auf dessen Dachflächen 48 und 50 dienen Zentrierstifte 114, 116. Im unteren Ende jedes der Tuben 60 und 62 sitzt eine abbildende Linsenoptik 80 bzw. 82.

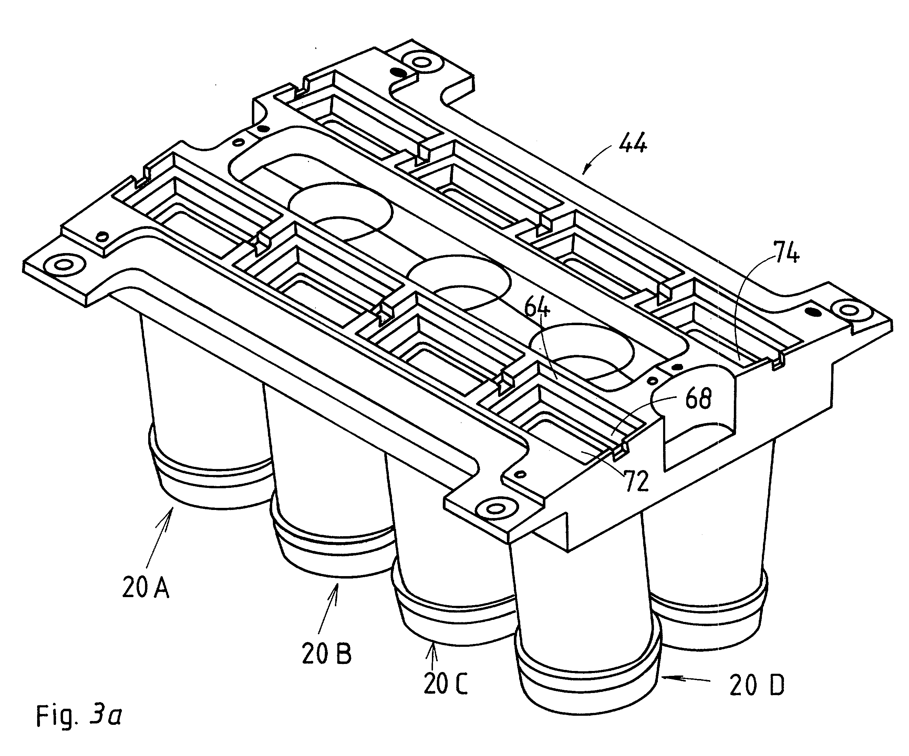

Wie aus Fig.2 ersichtlich ist schneiden sich die Achsen 56 und 58, die auch die optischen Achsen der Linsenoptiken 80 bzw. 82 bilden, im wesentlichen in der Ebene 88 der Transportbahn 10 (oder etwas oberhalb derselben auf der Oberfläche der auf der Transportbahn 10 laufenden Glasscherben). Diese Ebene 88 wird durch jede der Linsenoptiken 80 und 82 auf dem zugehörigen Detektor abgebildet. In Fig.2 sind die Randstrahlen der abbildenden Lichtbündel 94 und 96 dargestellt. Wie aus Fig.3a ersichtlich ist, sind jeweils insgesamt vier Empfängereinheiten 20A, 20B, 20C und 20D mit einem gemeinsamen Grundkörper 44 versehen.

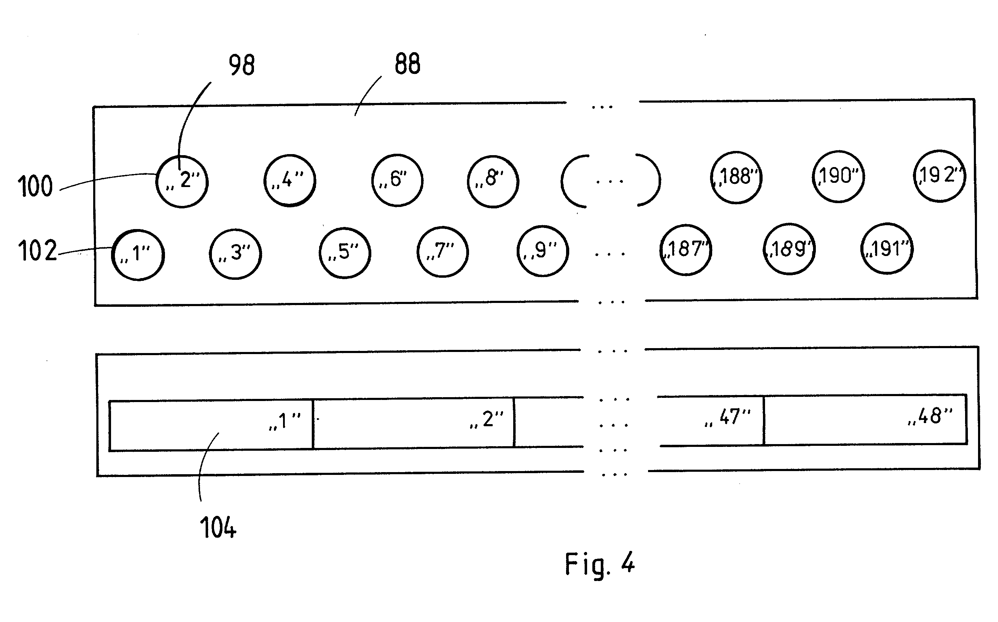

Fig.4 zeigt kreisförmige Bereiche 98 in der Ebene 88, wobei jeder kreisförmige Bereich 98 von einem zugehörigen photoelektrischen Detektor beobachtet wird. Um lückenlos die gesamte Breite der Transportbahn 10 überstreichen zu können, sind zwei seitlich gegeneinander versetzte, parallele Reihen 100 und 102 von kreisförmigen Bereichen 98 vorgesehen. Die Reihen 100 und 102 sind so gegeneinander versetzt, daß die von den photoelektrischen Detektoren erfaßten Bereiche 98 auf Lücke zueinander angeordnet sind.

Fig.4 zeigt auch die relative Lage und Ausrichtung der Effektorik 104. Vier beobachtete Bereiche 98 steuern einen der Effektoren "1" bis "48". So wird der Effektor "1" durch die den Bereichen "1", "2", "3" und "4" zugeordneten Detektoren gesteuert. Insgesamt sind achtundvierzig Effektoren vorgesehen.

Die Auswerteschaltung 22 speichert einen Ansteuerbefehl für die Effektorik und läßt diese mit einer sich aus der Geschwindigkeit des Gutes auf der Transportbahn und dem Abstand zwischen Empfängereinheiten und Effektoren ergebenden Verzögerung wirksam werden.

## Patentansprüche

1. Gerät zur Messung der Farbe von Glas, insbesondere von Glasbruch, durch Messung der Transmission des Glases gleichzeitig in unterschiedlichen Spektralbereichen, bei welchem das Glas auf einer Transportbahn (10) zwischen einer Lichtquelle (18) und einer Empfängereinheit (20) mit Filtern (84,86) und photoelektrischen Detektoren (76,78) hindurchgeführt wird,
**dadurch gekennzeichnet, daß**
(a) eine Gruppe (76;78) photoelektrischer Detektoren an einer Stirnseite je eines zylindrischen Tubus (60; 62) angeordnet ist,
(b) die Achsen (56;58) der Tuben (60;62) einen Winkel bilden und sich in der Ebene (88) der Transportbahn (10) schneiden,
(c) in den Tuben (60;62) je eine Linsenoptik (80;82) gehaltert ist, wobei jede Linsenoptik (80;82) die Ebene (88) der Transportbahn (10) auf einer zugehörigen Detektorgruppe (76;78) abbildet; und
(d) den Detektorgruppen (76;78) Filter (84; 86) mit jeweils unterschiedlichen Durchlassbereichen vorgeschaltet sind.

2. Gerät nach Anspruch 1, **dadurch gekennzeichnet, daß** die Transportbahn (10) im Bereich der Empfängereinheit (20) eine diffus-lichtdurchlässige Platte (14) enthält, hinter welcher die Lichtquelle (18) angeordnet ist.

3. Gerät nach Anspruch 1 oder 2, dadurch gekennzeichnet, daß die photoelektrischen Detektoren jeder Gruppe (76;78) gestaffelt in zwei gegeneinander auf Lücke versetzten Reihen angeordnet sind, die sich quer zur Transportrichtung der Transportbahn (10) erstrecken.

4. Gerät nach einem der Ansprüche 1 bis 3, **dadurch gekennzeichnet, daß** jede Empfängereinheit (20) aus mindestens einem Paar von Tuben (60,62) besteht, die in Transportrichtung der Transportbahn (10) nebeneinander angeordnet sind.

5. Gerät nach Anspruch 4, d**adurch gekennzeichnet, daß** jede Empfängereinheit (20) einen Grundkörper (44) aufweist, der auf einer Seite gegeneinander geneigte Bohrungen (52,54) zur Aufnahme der Tuben (60,62) aufweist und der auf der gegenüberliegenden, den Tuben (60,62) abgewandten Seite flach dachförmig mit zwei senkrecht zu den Achsen (56,58) der Tuben (60,62) und der Bohrungen (52,54) verlaufenden Flächen (48,50) ist, wobei in diesen Flächen (48,50) zu den Tuben (60,62) zentrierte Durchbrüche (68,72;70,74) zur Aufnahme der zugehörigen Detektorgruppe (76;78) angebracht sind.

6. Gerät nach einem der Ansprüche 1 bis 5, **dadurch gekennzeichnet, daß** über einer breiten Transportbahn (10) eine Mehrzahl von Empfängereinheiten (20) in einer sich quer zur Transportrichtung der Transportbahn (10) erstreckenden Reihe angeordnet ist.

## Claims

1. Apparatus for measuring the colour of glass, in particular of scraps of waste glass, by measuring the transmission of the glass simultaneously in different spectral ranges, wherein the glass is passed, on a transport path (10), between a light source (18) and a receiver unit (20) with filters and photoelectric detectors (76,78),
**characterized in that**
(a) a group (76;78) of photoelectric detectors is arranged at an end face of a respective cylindrical tube (60;62),
(b) the axes (56;58) of the tubes (60;62) form an angle and intersect in the plane (88) of the transport path (10),
(c) a lens optical system (80,82) is mounted in each of the tubes (60;62), each lens optical system (80;82) imaging the plane (88) of the transport path (10) on an associated detector group (76;78), and
(d) filters (84;86) having respective different transmission ranges are arranged in front of the detector groups (76;78).

2. Apparatus as claimed in claim 1, **characterized in that** the transport path (10) comprises a diffusedly-translocent plate (14) in the region of the receiver unit (20), the light source (18) being arranged behind this plate.

3. Apparatus as claimed in claim 1 or 2, **characterized in that** the photoelectric detectors of each group (76;78) are arranged out of line in two mutually staggered rows, which extend transversely to the direction of transport.

4. Apparatus as claimed in anyone of the claims 1 to 3, **characterized in that** each receiver unit (20) consists of at least a pair of tubes (60,62), which are arranged side-by-side in transport direction of the transport path (10).

5. Apparatus as claimed in claim 4, **characterized in that** each receiver unit (20) comprises a base body (44) which has mutually inclined bores (52,54) on one side for receiving the tubes (60,62) and which is small-angled roof-shaped on the opposite side remote from the tubes with two faces (48,50) normal to the axes (56,58) of the tubes (60,62) and the bores (52,54), apertures (68,72;70,74) centered with respect to the tubes are provided in these faces (48,50) for accommodating the associated detector groups (76;78).

6. Apparatus as claimed in anyone of the claims 1 to 5, **characterized in that** a plurality of receiver units (20) is arranged above a wide transport path (10) in a row extending transverse to the transport direction of the transport path.

## Revendications

1. Appareil destiné à mesurer la couleur du verre, notamment de bris de verre, en mesurant simultanément la transmission du verre dans différents domaines spectraux, appareil pour lequel le verre est introduit sur une voie de transport (10) entre une source de lumière (18) et une unité réceptrice (20) munie de filtres (84,86) et de détecteurs photoélectriques (76,78),
**caractérisé par le fait que**
(a) un groupe (76;78) de détecteurs photoélectriques est disposé chaque fois sur le devant d'un tube cylindrique (60;62),
(b) les axes (56;58) des tubes (60;62) forment un angle et se coupent dans le plan (88) de la voie de transport (10),
(c) un dispositif d'optique à lentilles (80;82) est fixé chaque fois dans les tubes (60;62), chaque dispositif d'optique à lentilles (80;82) reproduisant le plan (88) de la voie de transport (10) sur un groupe de détecteurs associé (76;78) ; et
(d) des filtres (84;86) ayant des domaines de passage différents sont appliqués avant les groupes de détecteurs (76;78).

2. Appareil selon la revendication 1, **caractérisé par le fait que** la voie de transport (10) comprend, dans le domaine de l'unité réceptrice (20), une plaque (14) perméable à la lumière de façon diffuse derrière laquelle la source de lumière (18) est disposée.

3. Appareil selon la revendication 1 ou 2, **caractérisé par le fait que** les détecteurs photoélectriques de chaque groupe (76;78) sont disposés de façon échelonnée en deux rangées décalées l'une par rapport à l'autre avec un vide entre les deux et s'étirant transversalement par rapport au sens de transport de la voie de transport (10).

4. Appareil selon l'une des revendications 1 à 3, **caractérisé par le fait que** chaque unité réceptrice (20) se compose d'au moins une paire de tubes (60,62) disposés les uns à côté des autres dans le sens de transport de la voie de transport (10).

5. Appareil selon la revendication 4, **caractérisé par le fait que** chaque unité de transport (20) présente un corps de base (44) qui présente, sur un côté, des perçages (52,54) inclinés les uns vers les autres et destinés à réceptionner les tubes (60,62) et qui, du côté opposé aux tubes (60,62), est muni, sous forme de toit plat, de deux surfaces (48,50) s'étendant verticalement par rapport aux axes (56,58) des tubes (60,62) et des perçages (52,54), des percements (68,72;70,74) centrés par rapport aux tubes (60,62) et destinés à réceptionner le groupe de détecteurs associé (76;78) étant placés dans ces surfaces (48,50).

6. Appareil selon l'une des revendications 1 à 5, **caractérisé par le fait que** plusieurs unités réceptrices (20) sont disposées au-dessus d'une large voie de transport (10) en une rangée s'étirant transversalement par rapport au sens de transport de la voie de transport (10).
